(19)

Europäisches
Patentamt
European
Patent Office
Office européen
des brevets

(11)  **EP 2 257 111 A1**

(12)  # EUROPEAN PATENT APPLICATION

(43) Date of publication:
**01.12.2010 Bulletin 2010/48**

(51) Int Cl.:
*H04W 52/24* (2009.01)   *H04W 52/32* (2009.01)

(21) Application number: **09360030.2**

(22) Date of filing: **26.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent
75008 Paris (FR)**

(72) Inventors:
• **Zhou, Hai
Faringdon
Swindon SN7 7FG (GB)**

• **Tao, Huiyu
Abingdon
Oxford OX14 2AR (GB)**

(74) Representative: **Coghlan, Judith Elizabeth Kensy et al
Bryer, Shelley, John Amor, Greenwood LLP
7 Gay Street
Bath BA1 2PH (GB)**

Remarks:
Amended claims in accordance with Rule 137(2) EPC.

(54)   **Setting transmission power of FEMTO cells**

(57)   A method of setting a transmission power of a broadcast channel of a femto base station in a wireless communications network, a femto base station capable of carrying out said method and a computer program product operable when executed on a computer to perform said method. Said method comprises the steps of:
(i) monitoring for a transmission on a broadcast channel from each neighbouring base station;

(ii) calculating from each received transmission an estimated distance between that neighbouring base station and said femto base station; and
(iii) setting said transmission power of the broadcast channel of the femto base station in response to that estimated distance to between a neighbouring base station and said femto base station which is calculated to be smallest.

FIG. 3

**Description**

FIELD OF THE INVENTION

The present invention relates to a method of setting a transmission power of a femto cell base station within a wireless communications network, a femto cell base station and computer program product.

BACKGROUND

Wireless telecommunications systems are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within a macro cell. Such smaller sized cells are sometimes referred to as micro cells, pico cells or femto cells. One way to establish a femto cell is to provide a femto cell base station that provides coverage having a relatively limited range within the coverage area of a macro cell. The transmission power of a femto cell base station is relatively low and hence each femto cell provides a small coverage area compared to that of a macro cell and covering, for example, an office or a home.

Such femto cells are typically provided where the communications coverage provided by the macro cell is poor or where a user wishes to use an alternative communications link provided locally, by the femto cell base station, to communicate with the core network. Such a situation may arise where, for example, a user has a pre-existing communications link and the user wishes to utilise that link in preference to that provided by a macro cell network provider to communicate with the core network. Femto cell base stations may be private access or public access. In femto cell base stations that are private access, access is restricted only to registered users, such as family members or particular groups of employees. In femto cell base stations that are public access, other users may also use the femto cell base station, subject to certain restrictions to protect the quality of service received by registered users.

A typical femto cell base station utilises a broadband Internet protocol connection as backhaul for connecting to the core network. One type of broadband connection is a digital subscriber line (DSL), which connects a DSL transceiver of the femto cell base station to the core network. The DSL enables voice calls and other services provided via the femto cell base station to be supported. The femto base station may also connect using an Ethernet connection to the Internet. The femto cell base station also includes a radio frequency (RF) transceiver connected to an antenna for radio communication within the femto cell. The femto base station generates a femto cell typically in the vicinity of a building, with which user equipment may communicate with in preference to a base station of the macro cell.

Typically each femto cell base station is preset at manufacture such that it transmits a pilot (also known as a broadcast, or beacon) channel, the pilot channel acts as a broadcast channel, alerting other base stations and user equipment to the presence of a base station. The pilot channel, together with other common channels, is preset at manufacture to transmit at a predetermined power. That predetermined power level is chosen to achieve a given signal quality at a specified distance from the femto cell base station, and that, transmit power is typically referred to as having a predetermined 'transmit radius'. The transmit radius may be understood to be the distance from the transmitter (in this case the femto base station) at which a signal may no longer be distinguished from noise. Although it will be understood that the transmit radius may be dependent upon the sensitivity of a receiver, in accordance with third generation partnership project (3GPP) universal mobile telecommunications system (UMTS) standards, the sensitivity of 3G receivers is typically similar such that reference to a 'transmit radius' in relation to the power of a transmission is well understood.

The pilot signal may be utilized in a number of ways, for example, in accordance with the third generation partnership project (3GPP) universal mobile telecommunications system (UMTS) standards, primary scrambling codes (PSCs) are used to distinguish between neighbouring base stations. Typically, there are between 6 and 16 PSCs that are cell available for use by femto cells. The PSC to be used by each femto cell base station is typically selected by an automatic configuration process, based on measurements made by that femto cell base station. For example, a femto cell base station may detect, from received signals emitted on the pilot channel, which PSCs are in use around the femto cell base station and may select a PSC that the femto base station has not detected as being in use; otherwise, the femto base station may select the PSC of the weakest signal received. Furthermore, the power of other transmission channels may be set with respect to the power of the pilot signal transmitted by a femto cell base station. In a typical wireless network, many tens of thousands femto base stations may be deployed within a network under the control of one network provider, which can make the manual provision and planning of the femto cell deployment impractical for an operator.

To help prevent the likelihood of interference between femto cell base stations it is desirable for the femto cell base stations to be able to automatically configure themselves, based on their assessment of the environment in which they operate.

Accordingly, it is desired to provide an improved technique for setting a transmission power of a femto cell base station in relation to neighbouring base stations.

SUMMARY

According to one aspect there is provided a method of setting a transmission power of a broadcast channel of a femto base station in a wireless communications network, said method comprising the steps of:

(i) monitoring for a transmission on a broadcast channel from each neighbouring base station;
(ii) calculating from each received transmission an estimated distance between that neighbouring base station and said femto base station; and
(iii) setting said transmission power of the broadcast channel of the femto base station in response to that estimated distance between a neighbouring base station and said femto base station which is calculated to be smallest.

As described above, femto cell base stations are set to transmit a pilot channel at a power equivalent to a given transmit radius, and that radius is set at manufacture. Since femto cell deployment is not strictly controlled by an operator, the pre-set transmit radius may be too large, and consequently the transmissions of that femto cell base station may interfere with the operation of adjacent femto cell base stations. The pre-set transmit radius may, however, be too small and consequently may not adequately cover the physical area for which it was intended.

The first aspect recognises that a problem with presetting the transmission power of the broadcast channel of a femto cell base station to correspond to a preset transmit radius without regard to surrounding femto and macro base stations may lead to undesirable interference. As the number of femto cell base stations in a given geographical area increases, the likelihood that a factory preset transmit power will be unsuitable also increases. Further, the first aspect recognises that the setting of a more suitable transmission power will be dependent upon the closest neighbouring femto cell base station, since it is that base station with which any transmissions are most likely to interfere.

Monitoring for a transmission from any neighbouring femto and macro base stations allows a femto cell base station to sense the presence of each neighbouring base station. Once sensed, each transmission may be used to calculate an estimated distance from the new femto cell base station to the base station from which the transmission originated. If more than one neighbouring base station is found by monitoring for transmissions, calculation of an estimated distance to each neighbouring base station helps to ensure that the transmission power can be set in accordance with the neighbouring base station that is estimated to be closest.

Setting the transmission power of the broadcast channel in accordance with the closest base station helps to ensure that the likelihood of undesirable interference is minimised, since it is the closest base station with which transmissions from a new femto base station is most likely to interfere. Furthermore if no transmissions are found, then the femto cell base station may set a maximum broadcast channel transmission power.

Other channels transmitted by the femto cell base station may have a transmission power set in accordance with the transmission power of the broadcast channel. Correctly setting the transmission power of the broadcast channel therefore assists efficient and correct operation of all channels.

In one embodiment, the step of setting the transmission power of the broadcast channel of said femto base station comprises setting the transmission power to correspond to a coverage radius which is a fraction of that estimated distance between a neighbouring base station and said femto base station which is calculated to be smallest. Setting the transmission power to correspond to a coverage radius substantially identical to the estimated closest neighbouring base station would result in overlapping areas of coverage from each of the base stations. Such an overlap may cause interference. Setting the transmission power of the femto cell base station such that the resulting coverage radius is a fraction of the estimated distance to the closest neighbouring base station can thus help to minimise the likelihood of interference.

In one embodiment, the coverage radius is set to substantially half the estimated distance to the closest neighbouring base station. Setting the coverage radius to approximately half the estimated distance to the closest neighbouring base station allows the femto base station to set a coverage area less likely to suffer from interference. Setting the coverage radius to approximately half the estimated distance to the closest neighbouring base station may be particularly useful in the situation where each femto base station is arranged to carry out a method in accordance with the first aspect. Such an arrangement further assists with minimisation of possible interference, since each base station maximises the area it may cover whilst minimising the likelihood of coverage overlap.

In one embodiment, the step of setting the transmission power of the broadcast channel of the femto base station further comprises the step of ensuring the set transmission power is greater than a predetermined minimum. If the transmission power is set to less than a predetermined minimum, a femto base station may not provide any coverage to users associated with that base station.

In one embodiment, the step of setting the transmission power of the broadcast channel of the femto base station further comprises the step of ensuring the set transmission power is less than a predetermined maximum. If the transmission power is set to more than a predetermined maximum a base station may, for example, interfere with the transmission of a macro base station.

In one embodiment, steps (i) to (iii) are periodically repeated in order to detect possible changes in the wireless communications network. Repeating the steps allows changes in the wireless communication network to be detected and, in particular, additions or removals to the femto cell network to be detected and possible changes to the optimum transmission power to be made in accordance with the changes to the wireless network. For example, if the closest neighbouring base station is removed, or turned off, repetition of the abovementioned steps will reveal a new closest neighbouring femto base station and the transmission power may be reset in accordance with the new calculations.

In one embodiment, the period of repeat of steps (i) to (iii) is pseudorandom. While a femto base station carries out a method in accordance with the first aspect, it may itself stop transmitting a broadcast signal. If a neighbouring base station is also carrying out a method at that moment, neither base station will detect a transmission from the other base station, even though, for example, those base stations may be nearest neighbours. In that case, neither base station sets a transmission power reflective of the true state of the surrounding wireless communication network. Setting a pseudorandom periodic repeat of the steps of the first aspect allows the likelihood of such synchronisation to be minimised, and helps mitigate the chance that all femto base stations in a geographical area perform the first aspect at the same time and consequently detect no neighbouring base stations. Said period may be a fraction of a day, such that the method of the first aspect is repeated several times a day.

In one embodiment, the calculation step further comprises the steps of:

receiving a transmission containing information relating to a signal strength of the transmission emitted by that neighbouring base station;
determining a signal strength of the transmission received; and
calculating, using the signal strength of the transmission received and the information regarding the strength of the signal emitted, an estimated distance between that neighbouring base station and said femto base station.

Typically each femto base station transmits a broadcast channel, and that transmission includes information relating to the strength at which that transmission was emitted. Each femto base station also typically includes a receiver, capable of determining the signal strength of a received. The femto cell base station may, from the received signals, calculate the attenuation of the transmission between emission and reception and, from that calculated attenuation, the separation distance between the emitting base station and receiving base station may be estimated by means, for example, of an appropriate look up table, or further calculation.

In one embodiment the calculation step further comprises the steps of:

calculating the path loss between the emitted signal strength and received signal strength; and
converting the calculated path loss to an estimated distance between that neighbouring femto base station and said femto base station.

The femto cell base station may, from a received transmission, calculate the path loss of each received transmission. That path loss may be used by the base station to calculate an estimated distance to each transmitting base station from which a transmission has been received.

According to a second aspect there is provided a femto base station operable to set a transmission power of a broadcast channel of a femto cell in a wireless communications network, said femto base station comprising:

monitoring logic operable to monitor for a transmission on a pilot channel from each neighbouring base station;

calculation logic operable to calculate from each transmission an estimated distance between that neighbouring base station and said femto base station;

setting logic operable to set said transmission power of the pilot channel of the femto base station in response to which neighbouring base station is estimated to be closest to said femto base station.

In one embodiment, the setting logic further comprises logic operable to set said transmission power to correspond to a coverage radius which is a fraction of that estimated distance between a neighbouring base station and the femto base station which is calculated to be smallest.

In one embodiment, the setting logic further comprises logic operable to set said transmission power to a coverage radius of approximately half the estimated distance to the estimated closest neighbouring base station.

In one embodiment, the setting logic further comprises logic operable to ensure the set transmission power is greater than a predetermined minimum.

In one embodiment, the setting logic further comprises logic operable to ensure the set transmission power is less than a predetermined maximum.

In one embodiment, the femto base station further comprises repeater logic, operable to periodically activate the monitoring logic, calculation logic and setting logic, in order to detect possible changes in the wireless communications network.

In one embodiment, the repeater logic is operable to periodically activate the monitoring logic, calculation logic and setting logic, said period being pseudorandom, in order to detect possible changes in the wireless communications network.

In one embodiment, the calculation logic further comprises:

a receiver, operable to receive a transmission containing information relating to a signal strength of a transmission emitted by a neighbouring femto base station, and generate a signal representative thereof;

receiving logic operable to determine the signal strength of the transmission received and generate a signal representative thereof;

the calculation logic being operable to use said signals representing the signal strength of said omitted transmission and said received transmission, to calculate an estimated distance between a neighbouring base station and the femto base station.

In one embodiment, the calculation logic is operable to calculate the path loss between the emitted signal strength and convert the calculated path loss to an estimated distance between a neighbouring base station and the femto base station.

According to a third aspect, there is provided a computer program product, operable when executed on a computer, to perform the method steps of the first aspect.

Further particular and preferred aspects of the present invention are set out in the accompanying independent and dependent claims. Features of the dependent claims may be combined with the features of the independent claims as appropriate, and in combinations other than those explicitly set out in the claims.

Brief Description of the Drawings

Embodiments of the present invention will now be described further, with reference to the accompanying drawings, in which:

Figure 1 illustrates the main components of a telecommunications network according to one embodiment;
Figure 2 illustrates a general femto cell deployment within one macro cell shown in
Figure 1;

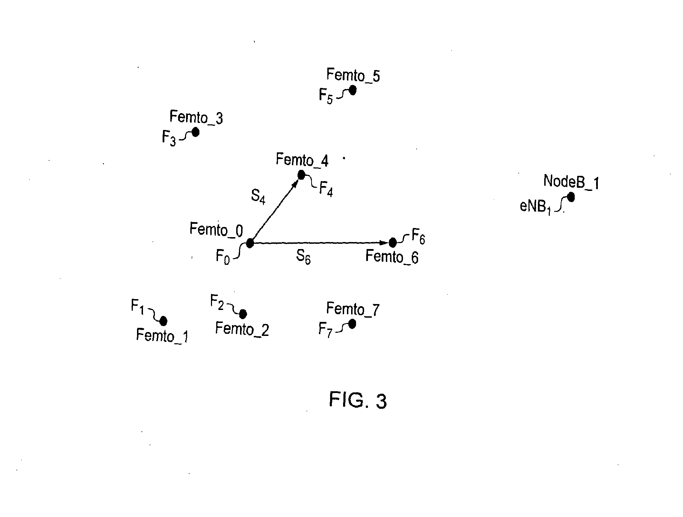

Figure 3 illustrates in more detail a specific femto cell deployment within the wireless communications network of
Figure 1;

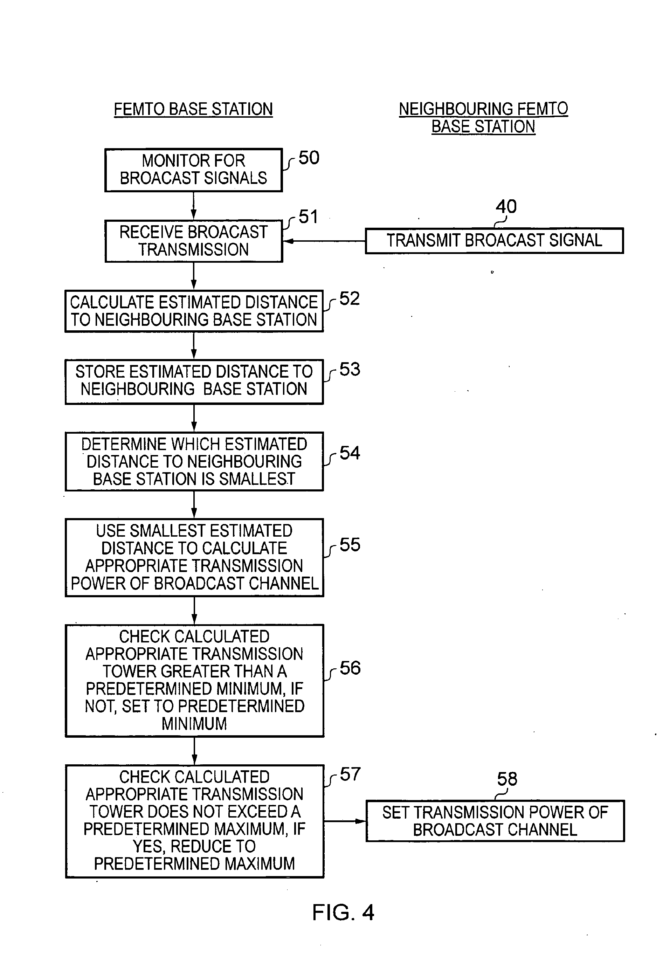

Figure 4 is a flowchart showing schematically the main processing steps for setting transmission power of a broadcast channel; and

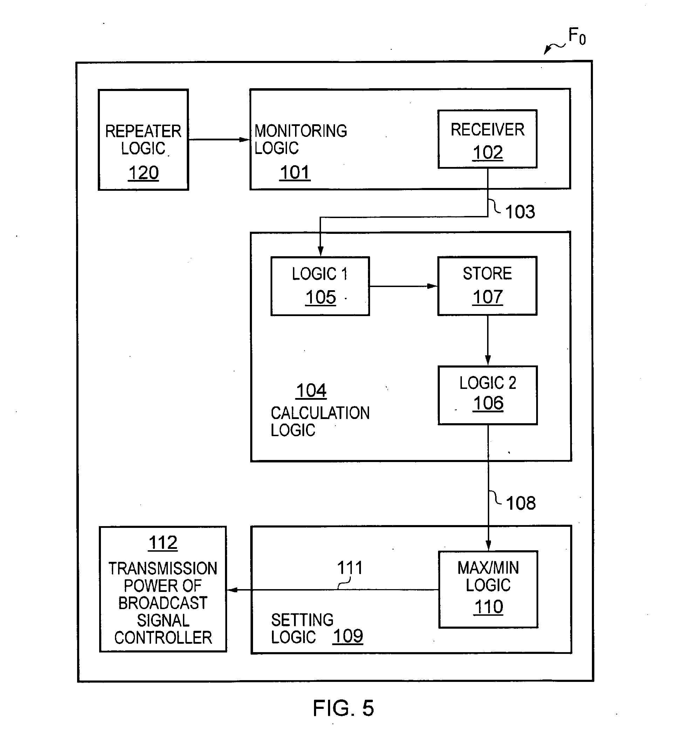

Figure 5 is a schematic representation of a femto base station including logic operable to set transmission power of a broadcast channel.

Description of the Embodiments

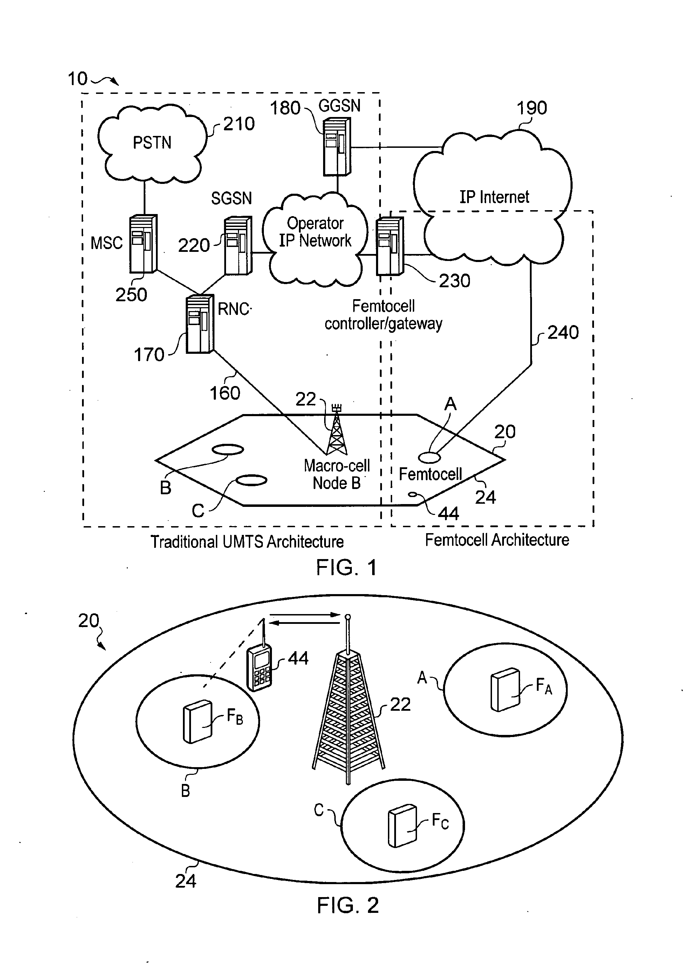

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors.

Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided femto cell base stations $F_A$ to Fc, each of which provides a femto cell A to C in the vicinity of a building within which the associated femto cell base station is installed. The femto cells A to C provide local communications coverage for a user in the vicinity of those buildings. Each femto cell base station $F_A$ to $F_C$ communicates via a femtocell controller/gateway (not shown). A handover or camping event occurs between the base station 22 and the femto cell base stations $F_A$ to $F_C$ when the femto base stations $F_A$ to $F_C$ detect that user equipment comes within range. The femto cell base stations $F_A$ to $F_C$ typically utilise the user's broadband Internet connection 240 (such as ADSL, Cable, Ethernet, etc.) as a backhaul.

Femto cell base stations $F_A$ to $F_C$ are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations $F_A$ to $F_C$ are provided locally by customers. Such femto cell base stations $F_A$ to $F_C$ provide local coverage in areas of the macro network where quality of service may be low. Hence, the femto cell base stations $F_A$ to $F_C$ provide for improved quality of service in areas which are difficult for network operators. To reduce the cost of the femto base stations $F_A$ to $F_C$ and to reduce complexity and interference effects of the femto cell on other user equipment within the macro cell, the transmission power of the femto cell base station $F_A$ to $F_C$ is relatively low in order to restrict the size of the femto cell to a range of tens of metres or less. The femto cell base stations $F_A$ to Fc have extensive auto-configuration and self-optimisation capability to enable a simply plug-and-play deployment. As such, they are designed to automatically integrate themselves into an existing macro cellular wireless network 10. In addition, some access point within the macro cellular network contains some functionality traditionally provided by the core network. One example is the UMTS base station router which integrates functions of the macro base station 20 and RNC 170 (this could be extended to also include the SGSN 220 and GGSN 180).

Figure 3 illustrates in more detail a specific femto cell deployment within the wireless communications network of Figure 1. As shown, an arrangement of seven existing femto cell base stations $F_1$ to $F_7$ is located within a macro cell, served by a macro base station $eNB_1$.

When a new femto cell base station $F_0$ is added to the arrangement, it auto-configures the transmission power of its broadcast channel, in response to the surrounding wireless connection network.

Figure 4 is a flowchart showing schematically the main processing steps for setting transmission power of a broadcast channel.

As shown in Figure 3, each femto base station $F_1$ to $F_7$ transmits a broadcast signal (step 40 in Figure 4). Femto base station $F_4$ may, for example, emit a broadcast signal with transmission strength of $T_4$ (broadcast).

Whilst carrying out an auto-configure procedure, femto base station $F_0$ does not itself transmit a broadcast channel. During the auto-configure procedure the femto base station $F_0$ monitors for transmissions from neighbouring femto cell base stations (step 50 as shown in Figure 4). In this instance, the femto base station $F_0$ receives a broadcast signal (step 51 as shown in Figure 4) from each of $F_1$ to $F_7$ and a broadcast signal from $eNB_1$ having transmission strengths of $T_1$(broadcast) to $T_7$(broadcast) and $TeNB_1$(broadcast) respectively.

The femto base station $F_0$ detects the strength $R_4$(broadcast) of the received signal from femto cell base station $F_4$. and the strength of corresponding received signals from other femto base stations and the macro cell base station.

Having received a signal, and as shown in step 52 in Figure 4, the femto base station $F_0$ calculates, from the received strength of the broadcast signal from each base station and the information contained in the signal itself regarding the strength at which it was transmitted, the value of path loss of the broadcast signal. The path loss value can be converted into an estimated separation distance, between the base station $F_0$ and each base station from which a broadcast signal has been received.

The values of the path loss are converted into separation distances for each one of the monitored femto and node 2 base stations, and those separation distances may be denoted by:

$$S_i \quad \text{where } i = 1, 2, 3, \ldots\ldots N$$

And N is the number of monitored femto and Node B base stations.

Each calculated estimated distance is stored, in step 53 of Figure 4, whilst further transmissions are received and distances calculated (steps 51 and 52).

The stored calculated estimated distances are then analysed (step 54) to determine which estimated distance to a neighbouring base station is smallest.

The broadcast transmission power of the femto base station $F_0$ is set (step 55) in accordance with the closest monitored neighbouring base station. In this case, femto cell base station $F_0$ is configured to set the transmission power of its own broadcast channel such that resulting coverage radius is a fraction of the smallest estimated separation distances ie:

$$T_{optimum} \text{ (broadcast) } F_4 = A \times \text{minimum } (S_i), \text{ where } i = 1, 2, 3, \ldots\ldots N$$

And where A has a range from 0 to 1 with a default value of 0.5.

Setting such a transmission power provides that the femto base station $F_0$ provides sufficient coverage, whilst simultaneously ensuring that the femto base station $F_0$ creates the least amount of interference to other transmitting femto and macro base stations. The calculated optimum transmission power is then checked against predetermined maximum and minimum values. If the calculated optimum transmission power is checked against the predetermined minimum and is found to be less than that minimum, the transmission power is re-set to the predetermined minimum (step 56). If the calculated optimum transmission power is checked against the predetermined maximum found to exceed that value, the transmission power is re-set to the predetermined maximum (step 57). A control signal may then be sent to the transmission power of the broadcast channel of femto base station $F_0$ (step 58).

In the event that $F_0$ does not detect an adjacent base station, $F_0$ may transmit at maximum available transmission power, i.e. the predetermined maximum.

Figure 5 is a schematic representation of key logic contained within a femto base station $F_0$, operable to set transmission power of a broadcast channel.

Said femto base station $F_0$ comprises monitoring logic 101, operable in accordance with step 50 shown in Figure 4, to monitor for broadcast signals from neighbouring base stations. The monitoring logic 101 further comprises a receiver 102 operable to receive broadcast transmissions in accordance with step 51 of the process shown in Figure 4.

If receiver 102 receives a broadcast transmission, it operates to generate a signal 103 which is fed to calculation logic 104.

Calculation logic 104 comprises first calculation logic 105 and second calculation logic 106.

First calculation logic 105 receives signal 103 from the receiver 102 and, based on that signal 103, calculates an estimated distance to the neighbouring base station, as described above in relation to step 52 of the process shown in Figure 4.

The calculated estimated distance is then sent to a store 107, also forming part of calculation logic 104, in accordance with step 53 of the process shown in Figure 4.

Each received broadcast signal is converted to an estimated distance and stored in store 107. Second calculation logic 106 is operable to determine which of the stored estimated distances is smallest, in accordance with step 54 of the process shown in Figure 4, and then (as described above) calculate an optimum broadcast channel transmission power in response to that smallest estimated distance (step 55 of Figure 4) such that the broadcast channel coverage radius is a fraction of the smallest estimated separation distance. A signal 108 representing the calculated optimum broadcast channel transmission power is sent to setting logic 109.

Setting logic 109 comprises max/min logic 110. Max/min logic receives the signal 108 representative of the calculated optimum broadcast channel transmission power and, in accordance with process steps 56 and 57 shown in Figure 4 and described above, is operable to set and re-set a control signal 111 to be sent to a controller 112 to ensure the transmission power is equal to or greater than a predetermined minimum and less than or equal to a predetermined maximum.

The controller 112 sets the transmission power of femto cell base station $F_0$ in accordance with signal 111.

Femto cell base station $F_0$ further comprises repeater logic 120 operable to periodically activate the monitoring logic 101, calculation logic 104 and setting logic 109, said period being pseudorandom, in order to detect possible changes in the wireless communications network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1.  A method of setting a transmission power of a broadcast channel of a femto base station in a wireless communications network, said method comprising the steps of:

    (i) monitoring for a transmission on a broadcast channel from each neighbouring base station;
    (ii) calculating from each received transmission an estimated distance between that neighbouring base station and said femto base station;
    (iii) setting said transmission power of the broadcast channel of the femto base station in response to that estimated distance between a neighbouring base station and said femto base station which is calculated to be smallest.

2.  A method according to claim 1, wherein said step of setting the transmission power of the broadcast channel of said femto base station comprises setting said transmission power to correspond to a coverage radius which is a fraction of said estimated distance between a neighbouring base station and said femto base station which is calculated to be smallest.

3.  A method according to claim 2, wherein the coverage radius is set to half the estimated distance to the closest neighbouring base station.

4.  A method according to any preceding claim, wherein the step of setting the transmission power of the broadcast channel of the femto base station further comprises the step of ensuring the set transmission power is greater than a predetermined minimum.

5.  A method according to any preceding claim, wherein the step of setting the transmission power of the broadcast channel of the femto base station further comprises the step of ensuring the set transmission power is less than a predetermined maximum.

6. A method according to claim 1, wherein steps (i) to (iii) are periodically repeated in order to detect possible changes in the wireless communications network.

7. A method according to claim 6, wherein said period is pseudorandom.

8. A method according to claim 1, wherein the calculation step further comprises the steps of:

receiving a transmission containing information relating to a signal strength of the transmission emitted by that neighbouring base station;
determining a signal strength of the transmission received; and
calculating, using the signal strength of the transmission received and the information regarding the strength of the signal emitted, an estimated distance between that neighbouring base station and said femto base station.

9. A method according to claim 8, further comprising the steps of:

calculating the path loss between the emitted signal strength and received signal strength; and
converting the calculated path loss to an estimated distance between that neighbouring base station and said femto base station.

10. A femto base station operable to set a transmission power of a broadcast channel of a femto cell in a wireless communications network, said femto base station comprising:

monitoring logic operable to monitor for a transmission on a pilot channel from each neighbouring base station;
calculation logic operable to calculate from each transmission an estimated distance between that neighbouring base station and said femto base station;
setting logic operable to set said transmission power of the broadcast channel of the femto base station in response to which neighbouring base station is estimated to be closest to said femto base station.

11. A computer program product, operable when executed on a computer, to perform the method steps of claim 1.

**Amended claims in accordance with Rule 137(2) EPC.**

1. A method of setting a transmission power of a broadcast channel of a femto base station ($F_0$) in a wireless communications network (10), said method comprising the steps of:

(i) monitoring (50) for a transmission on a broadcast channel from each neighbouring base station;
(ii) calculating (52) from each received transmission an estimated distance between that neighbouring base station and said femto base station;
(iii) setting (58) said transmission power of the broadcast channel of the femto base station in response to that estimated distance between a neighbouring base station and said femto base station which is calculated to be smallest.

2. A method according to claim 1, wherein said step of setting the transmission power of the broadcast channel of said femto base station comprises setting said transmission power to correspond to a coverage radius which is a fraction of said estimated distance between a neighbouring base station and said femto base station which is calculated to be smallest.

3. A method according to claim 2, wherein the coverage radius is set to half the estimated distance to the closest neighbouring base station.

4. A method according to any preceding claim, wherein the step of setting the transmission power of the broadcast channel of the femto base station further comprises the step of ensuring (56) the set transmission power is greater than a predetermined minimum.

5. A method according to any preceding claim, wherein the step of setting the transmission power of the broadcast channel of the femto base station further comprises the step of ensuring (57) the set transmission power is less than a predetermined maximum.

**6.** A method according to claim 1, wherein steps (i) to (iii) are periodically repeated in order to detect possible changes in the wireless communications network.

**7.** A method according to claim 6, wherein said period is pseudorandom.

**8.** A method according to claim 1, wherein the calculation step further comprises the steps of:

receiving a transmission containing information relating to a signal strength of the transmission emitted by that neighbouring base station;
determining a signal strength of the transmission received; and
calculating, using the signal strength of the transmission received and the information regarding the strength of the signal emitted, an estimated distance between that neighbouring base station and said femto base station.

**9.** A method according to claim 8, further comprising the steps of:

calculating the path loss between the emitted signal strength and received signal strength; and
converting the calculated path loss to an estimated distance between that neighbouring base station and said femto base station.

**10.** A femto base station (F0) operable to set a transmission power of a broadcast channel of a femto cell in a wireless communications network, said femto base station comprising:

monitoring logic (101) operable to monitor for a transmission on a pilot channel from each neighbouring base station;
calculation logic (104) operable to calculate from each transmission an estimated distance between that neighbouring base station and said femto base station;
setting logic (109) operable to set said transmission power of the broadcast channel of the femto base station in response to which neighbouring base station is estimated to be closest to said femto base station.

**11.** A computer program product, operable when executed on a computer, to perform the method steps of claim 1.

FIG. 1

FIG. 2

Femto_5

$F_5$

Femto_3

$F_3$

Femto_4

$S_4$ $F_4$

NodeB_1

eNB$_1$

Femto_0

$F_0$ $S_6$ Femto_6 $F_6$

$F_1$

Femto_1

$F_2$

Femto_2

Femto_7

$F_7$

FIG. 3

FEMTO BASE STATION

NEIGHBOURING FEMTO
BASE STATION

MONITOR FOR
BROACAST SIGNALS $\quad$ 50

RECEIVE BROACAST
TRANSMISSION $\quad$ 51

40

TRANSMIT BROACAST SIGNAL

CALCULATE ESTIMATED DISTANCE
TO NEIGHBOURING BASE STATION $\quad$ 52

STORE ESTIMATED DISTANCE TO
NEIGHBOURING  BASE STATION $\quad$ 53

DETERMINE WHICH ESTIMATED
DISTANCE TO NEIGHBOURING
BASE STATION IS SMALLEST $\quad$ 54

USE SMALLEST ESTIMATED
DISTANCE TO CALCULATE
APPROPRIATE TRANSMISSION
POWER OF BROADCAST CHANNEL $\quad$ 55

CHECK CALCULATED
APPROPRIATE TRANSMISSION
TOWER GREATER THAN A
PREDETERMINED MINIMUM, IF
NOT, SET TO PREDETERMINED
MINIMUM $\quad$ 56

CHECK CALCULATED
APPROPRIATE TRANSMISSION
TOWER DOES NOT EXCEED A
PREDETERMINED MAXIMUM, IF
YES, REDUCE TO
PREDETERMINED MAXIMUM $\quad$ 57

58

SET TRANSMISSION POWER OF
BROADCAST CHANNEL

FIG. 4

$F_0$

FIG. 5

Europäisches
Patentamt

European
Patent Office

Office européen
des brevets

**EUROPEAN SEARCH REPORT**

Application Number

EP 09 36 0030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 450 123 A (MOTOROLA INC [US]) 17 December 2008 (2008-12-17) * abstract * * page 2, lines 12-32 * * page 3, line 20 - page 5, line 30 * * page 8, line 18 - page 12, line 12 * * figure 1 * | 1-11 | INV. H04W52/24 H04W52/32 |
| X | WO 2009/023604 A2 (QUALCOMM INC [US]; YAVUZ MEHMET [US]; BLACK PETER J [US]; NANDA SANJIV) 19 February 2009 (2009-02-19) * abstract * * paragraphs [0072] - [0109] * * figures 1, 5 * | 1-11 | |
| A | US 2008/188265 A1 (CARTER ALAN [GB] ET AL) 7 August 2008 (2008-08-07) * abstract * * paragraphs [0067] - [0076] * * figure 6 * | 1-11 | |
| A | CLAUSSEN H ET AL: "Self-optimization of coverage for femtocell deployments" WIRELESS TELECOMMUNICATIONS SYMPOSIUM, 2008. WTS 2008, IEEE, PISCATAWAY, NJ, USA, 24 April 2008 (2008-04-24), pages 278-285, XP031275017 * abstract * * page 2, right-hand column, last paragraph - page 3, right-hand column, paragraph 1 * | 1-11 | TECHNICAL FIELDS SEARCHED (IPC) H04W |
| A | EP 1 343 336 A1 (LUCENT TECHNOLOGIES INC [US]) 10 September 2003 (2003-09-10) * abstract * * paragraphs [0005] - [0022], [0 37] * | 1-11 | |

The present search report has been drawn up for all claims

| Place of search | Date of completion of the search | Examiner |
|---|---|---|
| Munich | 16 October 2009 | Helms, Jochen |

EPO FORM 1503 03.82 (P04C01)

## ANNEX TO THE EUROPEAN SEARCH REPORT
## ON EUROPEAN PATENT APPLICATION NO.

EP 09 36 0030

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2009

| Patent document cited in search report | | Publication date | Patent family member(s) | | Publication date |
|---|---|---|---|---|---|
| GB 2450123 | A | 17-12-2008 | NONE | | |
| WO 2009023604 | A2 | 19-02-2009 | US | 2009042593 A1 | 12-02-2009 |
| | | | US | 2009042594 A1 | 12-02-2009 |
| | | | US | 2009042595 A1 | 12-02-2009 |
| | | | US | 2009042596 A1 | 12-02-2009 |
| | | | WO | 2009023587 A2 | 19-02-2009 |
| | | | WO | 2009023592 A2 | 19-02-2009 |
| | | | WO | 2009023596 A2 | 19-02-2009 |
| US 2008188265 | A1 | 07-08-2008 | GB | 2447439 A | 17-09-2008 |
| | | | WO | 2008093100 A2 | 07-08-2008 |
| EP 1343336 | A1 | 10-09-2003 | DE | 60216720 T2 | 04-10-2007 |

EPO FORM P0459

For more details about this annex : see Official Journal of the European Patent Office, No. 12/82